# EUROPEAN PATENT SPECIFICATION

(11) **EP 2 514 717 B1**
(45) Date of publication and mention of the grant of the patent: **13.08.2014**
(21) Application number: 10838014.8
(22) Date of filing: 14.06.2010
(51) Int. Cl.: C01B 33/155

(54) **PROCESS FOR PRODUCING A METHYLSILICIC ACID HYDROGEL**
VERFAHREN ZUR HERSTELLUNG EINES METHYLKIESELSÄURE-HYDROGELS
PROCÉDÉ DE PRODUCTION D HYDROGEL D ACIDE MÉTHYLSILICIQUE

(30) Priority: 16.12.2009 UA 2009013146
(43) Date of publication of application: 24.10.2012
(73) Proprietor: Sorbocom Limited, Nicosia 1082 (CY)
(72) Inventor: KABACHNYI, Gennadii Ivanovych, Kharkov 61091 (UA); KABACHNA, Alia Vasylivna, Kharkov 61091 (UA); KABACHNYI, Oleksandr Gennadiiovych, Kiev 02095 (UA); SHELKOVA, Eliona Volodymyrivna, Kiev 02140 (UA); DIDENKO, Dmytro Mykhailovych, Zaporozhie 69106 (UA)
(74) Representative: Glawe, Delfs, Moll
(86) International application number: PCT/UA2010/000030
(87) International publication number: WO 2011/075095

(56) References cited:
- EP-A1- 2 075 276
- RU-C1- 2 111 979
- UA-C2- 27 434
- ZHANG Z ET AL: "Preparation of transparent methyl-modified silica gel", JOURNAL OF NON-CRYSTALLINE SOLIDS, NORTH-HOLLAND PHYSICS PUBLISHING. AMSTERDAM, NL, vol. 189, no. 3, 1 September 1995 (1995-09-01), pages 212-217, XP004067708, ISSN: 0022-3093, DOI: 10.1016/0022-3093(95)00209-X

## Description

### Field of technology

The present invention relates to production of adsorbents and specifically to a process for producing a hydrogel of methylsilicic acid, which can be used for absorption purification processes of liquids from microorganisms (water, biological fluids), from toxic metabolites, radionuclides, including among others as a medicament - enterosorbent, as well as in the treatment of purulent wounds.

### Prior Art

Technologies relating to production of a hydrogel of methylsilicic acid relate to new technologies, which are developed for industrial application since relatively recently.

A process for producing a hydrogel of methylsilicic acid is known, comprising a process of polycondensation of solution of sodium- or potassium methylsiliconate, addition of a solution of a strong acid to it until a hydrogel is formed, its grinding, activation, further treatment with water (Patent of invention of the Russian Federation No. 2111979, int. cl. C01G 77/02, publ. 27/05/1998 [1]). This process allows production of sorbents with sorption capacity of (3.3-4.6 mg/g) having a selectivity to medium molecular weight organic metabolites. However, this process does not allow producing an end-product with a high degree of adsorption activity increase.

A process for producing a hydrogel of methylsilicic acid is known, comprising preparation of a working mixture from methyltriethoxysilane and an organic solvent, preparation of a hydrolyzing mixture from hydrochloric acid and drinking water, preparation of an alkaline solution, hydrolysis of methyltriethoxysilane in the presence of an acidic catalyst with a subsequent alkaline treatment, setting of the reaction mass, grinding of the resulting alcogel of methylsilicic acid, its subsequent treatment with water until a hydrogel of methylsilicic acid is formed (Patent of invention of Ukraine No. 27891, int. cl. C01B 33/135, publ. 16/10/2000, bulletin No. 5[2]). This solution allows production of a medical gel with a slightly increased adsorption activity, which exhibits antacid properties, but the degree of adsorption activity increase is not sufficient, furthermore, use of this process characterized by corresponding technological parameters and substances used in it, does not allow efficiently saving one of the reagents - ethyl alcohol.

The closest to the proposed invention is a process for producing a hydrogel of methylsilicic acid (prototype), comprising preparation of a working mixture from methyltriethoxysilane and an organic solvent, preparation of a hydrolyzing mixture from hydrochloric acid and drinking water, preparation of an alkaline solution, hydrolysis of methyltriethoxysilane in the presence of an acidic catalyst with a subsequent alkaline treatment, setting of the reaction mass, grinding of the resulting alcogel of methylsilicic acid, its subsequent treatment with water until a hydrogel of methylsilicic acid is formed (Patent of invention of Ukraine No. 27434, int. cl. C01B 33/135, publ. 15/09/2000, bulletin. No. 4 [3]). This process allows production of a gel with an increased adsorption activity, but the degree of adsorption activity increase is not sufficient, furthermore, use of this process characterized by corresponding technological parameters, use of certain substances (process reagents), does not allow saving one of the important reagents - ethyl alcohol.

### Disclosure of the invention

In the basis of the present invention lies a problem of development of a process for producing a hydrogel of methylsilicic acid, which, on the account of the proposed new quantitative ratios of substances (process reagents), quantitative parameters of the process, sequence of actions, would allow a 2.0 - 3.9 fold increase of adsorption activity of the end product, reduce the consumption of ethyl alcohol by 30 - 40%.

Said problem is solved in that the process for producing a hydrogel of methylsilicic acid comprises preparation of a working mixture from methyltriethoxysilane and an organic solvent, preparation of a hydrolyzing mixture from hydrochloric acid and purified water, preparation of an alkaline solution, hydrolysis of methyltriethoxysilane in the presence of an acidic catalyst with a subsequent alkaline treatment, setting of the reaction mass, grinding of the resulting alcogel of methylsilicic acid, its further washing with purified water until a hydrogel of methylsilicic acid is formed. What is **new** is that in preparation of the working mixture an aqueous solution of ethanol is used as the organic solvent with the volume percent of ethyl alcohol from 60 to 96.5%; quantitative volumetric ratio of methyltriethoxysilane to the organic solvent as the aqueous ethanol solution is 1 - 1.2 : 2 - 2.7, respectively; methyltriethoxysilane is used in a proportion by mass of the basic substance of not less than 98%; hydrolysis of methyltriethoxysilane is carried out at a volume ratio of the working mixture to the hydrolyzing mixture of 3 - 3.5 : 0.7 - 1.5, respectively; time of introduction of the hydrolyzing mixture into the reaction mass is 30 - 40 minutes; setting of the resulting reaction mass is carried out for 3 - 3.5 hours at a pH value of not less than 3; introducing of an alkaline solution, which has a temperature of 16 - 30 ° C, into the resulting reaction mass after completion of the hydrolysis of methyltriethoxysilane; after which the resulting alcohydrogel of methylsilicic acid is kept for maturation for not less than 7.5 hours; maturation process of the alcohydrogel of methylsilicic acid is carried out until a colourless intermediate product with a slight opalescence is produced; washing of the grinded alcohydrogel of methylsilicic acid is carried out by introducing of purified water at a rate of 2 - 4 litres per hour into it.

Development, refinement of the features of the proposed technical solution, including among others for its use, use in certain cases is characterized by the following features.

Methyltriethoxysilane is used in a proportion by mass of the basic substance of 98-99.5%.

Hydrolyzing mixture is prepared from hydrochloric acid with a concentration of 35-39 mass % and water purified according to the requirements of the State Pharmacopoeia of Ukraine.

Necessary mixing is carried out for 10 - 15 minutes after the introduction of the hydrolyzing mixture into the reaction mass prior to its temporary setting.

Drinking water for the replacement of ethyl alcohol in the alcohydrogel is purified beforehand to pH 5-7 according to the requirements of the State Pharmacopoeia of Ukraine, and the process of replacement is carried out until a neutral reaction according to phenolphthalein.

Resulting alcohydrogel of methylsilicic acid is kept for 7.5 - 9.0 hours for maturation after the introduction of the alkaline solution.

Alcohydrogel of methylsilicic acid is grinded for 1 - 2 hours until particles with sizes not greater than 4 - 6 mm are produced for the replacement of ethyl alcohol with water.

Implementation of the proposed process in an industrial environment is illustrated by the following examples.

The proposed process for producing a hydrogel of methylsilicic acid is carried out in accordance with the claims of the invention:

The following is carried out, preparation of a working mixture from methyltriethoxysilane and an organic solvent, preparation of a hydrolyzing mixture from hydrochloric acid and purified water, preparation of an alkaline solution, hydrolysis of methyltriethoxysilane in the presence of an acidic catalyst with a subsequent alkaline treatment, temporary setting of the reaction mass, grinding of the resulting alcogel of methylsilicic acid, its further treatment with purified water until a hydrogel of methylsilicic acid is formed.

In accordance with the new features of the proposed process: for example, an aqueous solution of ethanol at the concentration of 60% by volume is the organic solvent in preparation of the working mixture; quantitative (volumetric) ratio of methyltriethoxysilane to the organic solvent is 1 : 2, respectively; methyltriethoxysilane is used in a proportion by mass of the basic substance of not less than 98%; hydrolysis of methyltriethoxysilane is carried out at a volume ratio of the working mixture to the hydrolyzing mixture of 3 : 1.5, respectively; time of the introduction of the hydrolyzing mixture into the reaction mass is 30 minutes; setting of the resulting reaction mass is carried out for 3.5 hours at a pH value of not less than 3; introducing of an alkaline solution, which has a temperature of 16 - 30° C, into the resulting reaction mass after completion of the hydrolysis of methyltriethoxysilane; resulting alcohydrogel of methylsilicic acid is kept for maturation for 8.0 hours; maturation process of the alcohydrogel of methylsilicic acid is carried out until a colourless intermediate product with a slight opalescence is produced, whereas subsequent treatment of the grinded alcohydrogel of methylsilicic acid with purified water for replacing ethanol in it is carried out by introducing of purified water with pH 5-7 into it, at a rate of 2 - 4 litres per hour until an end product in the form of a hydrogel of methylsilicic acid is formed.

Further, in implementation of the proposed process: hydrolyzing mixture is prepared from hydrochloric acid with a concentration of 35-39 mass % and water purified according to the requirements of the State Pharmacopoeia of Ukraine;
mixing is carried out for 10 - 15 minutes after the introduction of the hydrolyzing mixture into the reaction mass prior to its temporary setting;
drinking water for the replacement of ethyl alcohol in the alcohydrogel is purified beforehand, as described above, to pH 5-7, process of replacement is carried out until a neutral reaction according to phenolphthalein.

### Example 1.

The proposed process for producing a hydrogel of methylsilicic acid is carried out in accordance with the claims of the invention:

The following is carried out, preparation of a working mixture from methyltriethoxysilan and an organic solvent, preparation of a hydrolyzing mixture from hydrochloric acid and purified water, preparation of an alkaline solution, hydrolysis of methyltriethoxysilane in the presence of an acidic catalyst with a subsequent alkaline treatment, setting of the reaction mass, grinding of the resulting alcogel of methylsilicic acid, its further treatment with purified water until a hydrogel of methylsilicic acid is formed.

In accordance with the new features of the proposed process: in preparation of the working mixture an aqueous solution of ethanol with concentration of ethyl alcohol by volume from 60 to 96.5% is used as the organic solvent; quantitative (volumetric) ratio of methyltriethoxysilane to the organic solvent is 1 : 2, respectively; methyltriethoxysilane is used in a proportion by mass of the basic substance of not less than 98%; hydrolysis of methyltriethoxysilane is carried out at a volume ratio of the working mixture to the hydrolyzing mixture of 3 : 1.5, respectively; time of the introduction of the hydrolyzing mixture into the reaction mass is 30 minutes; setting of the resulting reaction mass is carried out for 3.5 hours at a pH value of not less than 3; introducing of the alkaline solution, which has a temperature of 16 - 30° C, into the resulting reaction mass after completion of the hydrolysis of methyltriethoxysilane; resulting alcohydrogel of methylsilicic acid is kept for maturation for 7-8 hours; maturation process of the alcohydrogel of methylsilicic acid is carried out until a colourless intermediate product with a slight opalescence is produced, whereas subsequent treatment of the grinded alcohydrogel of methylsilicic acid with purified water for replacing ethanol in it is carried out by introducing of purified water with pH 5-7 into it, at a rate of 2 - 4 litres per hour until an end product in the form of a hydrogel of methylsilicic acid is formed.

Further, in implementation of the proposed process: hydrolyzing mixture is prepared from hydrochloric acid with a concentration of 35-39 mass % and water purified according to the requirements of the State Pharmacopoeia of Ukraine;
after the introduction of the hydrolyzing mixture into the reaction mass prior to its temporary setting the mixing is carried out for 10 - 15 minutes;
drinking water for the replacement of ethyl alcohol in the alcohydrogel is purified beforehand, as described above, to pH 5-7, process of replacement is carried out until a neutral reaction according to phenolphthalein.

### The best variant of carrying out the invention in an industrial environment (quantitative specifications are also given in Table 1 - for Example 1).

In the industrial environment the technological process for producing a hydrogel of methylsilicic acid according to the proposed process is carried out as follows.

In essence of the production of a hydrogel of methylsilicic acid is the hydrolysis of methyltriethoxysilane in the medium of ethyl alcohol in the presence of an acidic catalyst with a subsequent polycondensation with an addition of an alkaline catalyst, gel maturation, its grinding, treatment (washing) with water resulting the end product - a hydrogel of methylsilicic acid.

Illustration of the process (chemical formulas): 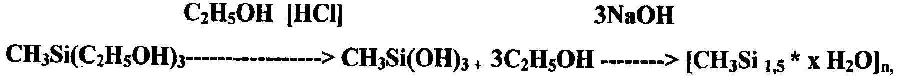 wherein x = 30 - 38.

Structure of the resulting polymer with the required size of primary granules (globules) is formed in strict compliance with the ratios of the reacting reagents. Therefore, the technologic process provides their contact in the form of solutions, the preparation of which constitutes preceding operations at this stage.

### 1. Preparation of a working mixture.

Working mixture - a solution of methyltriethoxysilane in an organic solvent is prepared by dissolving methyltriethoxysilane **CH₃Si(C₂H₅OH)₃** in this organic solvent, which is an aqueous solution of ethyl alcohol (ethanol): quantitative (volumetric) ratio of methyltriethoxysilane to the organic solvent (aqueous solution of ethyl alcohol) is 1 : 2, respectively. For the preparation of the working solution methyltriethoxysilane in a proportion by mass of the basic substance of not less than 98% is used, and ethyl alcohol having 60% concentration (aqueous solution of ethyl alcohol at the concentration of 60% by volume). Preparation of the working mixture is carried out in a separate unit, in which the organic solvent - ethanol is loaded, following which the unit is loaded with methyltriethoxysilane. The volumes of reagents, which are loaded, are controlled with a gauge glass. After loading the reagents are mixed for 2.5 - 3 hours. Subsequently, a sample is taken from a bottom part of the unit for determination of the specific weight, which should be in the range of 0.840 - 0.845 g/cm³.

Resulting working mixture is a solution of methyltriethoxysilane in the medium of the organic solvent.

### 2. Preparation of a hydrolyzing mixture.

Hydrolyzing mixture is a 0.5 - 1.5% solution of concentrated hydrochloric acid (note: hydrochloric acid - chlorhydric acid - in previous sources of information) in purified water.

For the preparation of the hydrolyzing mixture hydrochloric acid is used with the basic substance concentration of 36 mass % 0.84 - 0.85 litres and water 45±1 litres, which is purified beforehand according to the requirements of the State Pharmacopoeia of Ukraine.

Hydrolyzing mixture is prepared in a gauge tank, in which purified water is filled by gravity flow from a separate unit with controlling its volume through a gauge glass of the gauge tank, subsequently a necessary amount of hydrochloric acid is filled into the gauge tank through a funnel. Subsequently, the mixture is mixed for 10 - 15 minutes, a sample is taken for determination of concentration of hydrochloric acid in the resulting hydrolyzing mixture.

### 3. Preparation of an alkaline solution.

For the subsequent synthesis of a hydrogel of methylsilicic acid a 20% solution of sodium hydroxide (NaOH) or potassium hydroxide (KOH) is prepared. Alkaline solution is prepared in a separate tank, in which purified water is filled with controlling its amount through a gauge glass, subsequently an alkali is poured through a loading hatch, the hatch is closed and the mixing is carried out. Completeness of dissolving is monitored by the content of sodium hydroxide (NaOH) or potassium hydroxide (KOH).

Subsequent use of the alkaline solution is only possible after its cooling to a temperature of 16-30° C.

### 4. Hydrolysis of methyltriethoxysilane.

Subsequently, hydrolysis of methyltriethoxysilane is carried out by dosing of the hydrolyzing mixture into the resulting mixture with a mandatory control of technological parameters of the process.

Hydrolysis is carried out in a drum-type reactor with a volume ratio of the working mixture to the hydrolyzing mixture of 3 : 1.5, respectively.

Working mixture from the mixer is transported with vacuum into the gauge tank, control of the amount of the working mixture is carried out through a gauge glass of the gauge tank. After that, portions of the working mixture by gravity flow are fed into the drum-type reactor. Subsequently, rotation of the drum is turned on and the hydrolyzing mixture is introduced into the working mixture through a separate gauge tank. Rate of the introduction of the hydrolyzing mixture is controlled with a calibration scale of the gauge tank. Time of the introduction of the hydrolyzing mixture into the reaction mixture is 30 minutes. Mixing is carried out for 10 - 15 minutes after completion of the introduction of the hydrolyzing mixture, then mixing is discontinued, and the reaction mass without mixing is set for 3.5 hours at a pH value of not less than 3.

### 5. Production of an alcohydrogel of methylsilicic acid.

After completion of the hydrolysis of methyltriethoxysilane, an alkaline solution in the amount of 5.95 litres, which has a temperature of 16 - 30°C, is introduced into the reactor with the resulting reaction mass with constant mixing from the gauge tank by gravity flow.

After the introduction of the entire volume of the alkaline solution the mixing of the reaction mass is discontinued. Gelation occurs in the reaction mass at rest - process of gel maturation, structure formation of an alcohydrogel of methylsilicic acid.

Process of gel maturation is carried out for not less than 7.5 hours - until a colourless alcohydrogel of methylsilicic acid with a slight opalescence is produced.

### 6. Grinding and washing of an alcohydrogel of methylsilicic acid.

The resulting alcohydrogel of methylsilicic acid is grinded for 1 - 2 hours until particles with sizes not greater than 4 - 6 mm are produced.

After that a replacement of ethyl alcohol in the alcohydrogel of methylsilicic acid is carried out (ethyl alcohol in the alcohydrogel of methylsilicic acid is found in a bound state and represents an intermicellar liquid) by introducing of purified water into the alcohydrogel of methylsilicic acid at a rate of 2 - 4 litres per hour until a neutral reaction according to phenolphthalein and a formation of a final (end) product - a hydrogel of methylsilicic acid: during washing ethyl alcohol is replaced by water, and in such a way an alcohydrogel of methylsilicic acid is turned into a hydrogel of methylsilicic acid. After completion of the process of mixing all particles of the produced gel of methylsilicic acid should settle out onto the bottom of the unit, which indicates the end of the process.

After formation of the hydrogel of methylsilicic acid the end product is separated from the mother solution, which is then washed from the remaining alkali with purified water until a neutral reaction according to phenolphthalein.

Process of washing of the hydrogel of methylsilicic acid is controlled by the presence of alkali in the wash water using an universal indicator paper. In the absence of changes in colour of the indicator paper the hydrogel of methylsilicic acid is analysed for chlorides content and pH.

If analysis results are positive, the end product - the hydrogel of methylsilicic acid is loaded into a transport container, then - into a consumer container.

Process scheme for producing a hydrogel of methylsilicic acid according to the claims of the invention of the proposed process is also illustrated by Table 1.

New features of the proposed process in interaction with known features in implementation of this process show new properties and thus the use of an aqueous solution of ethyl alcohol with a concentration of not less than 60% by volume as the organic solvent allows provision of an optimal interval of quantitative ratios of these substances at the stage of preparation of the methyltriethoxysilane solution. Just the proposed concentration of ethyl alcohol in the aqueous solution and the ratio of methyltriethoxysilane to the aqueous solution of ethyl alcohol of 1 - 1.2 : 2 - 2.7 allows creation of optimal conditions for the effective carrying out of this stage of the process, and further, conditions for producing an end product with a high adsorption activity, which is characterized by an optimal combination of density, size of particles and size of pores. Herewith it is contemplated that the use of a mixture of protic solvents - ethyl alcohol and water in the proposed concentration - due to their high dielectric permittivity starting, from the first stage of the process, allows creation of favourable conditions for the formation of such a gel mesh structure and content of intermicellar liquid in this mesh, which provides an increase of adsorption activity of the end product.

Use of methyltriethoxysilane in a proportion by mass of the basic substance of not less than 98% warrants the maximal provision of the ingredient mass of this substance in the process of its dissolving in the organic solvent and further use in the following stages of the process.

Volumetric ratio of the working mixture to the hydrolyzing mixture of 3 - 3.5 : 0.7 - 1.5, respectively, is selected as a result of numerous experiments, which verified the range limits of the optimal values of this ratio proposed by the authors.

Gradual introduction of the hydrolyzing mixture into the reaction mass for 30 - 40 minutes together with the time of setting of the resulting reaction mass for 3 - 3.5 hours at a pH value of not less than 3, provides for the formation of such a reaction mass, which by its physicochemical properties, including among others by rheological properties, is necessary for the effective conduction of further process and determines after completion of the hydrolysis of methyltriethoxysilane introduction of alkaline solutions, which has a temperature of just 16-30 °C.

### Listing and brief specification of Tables illustrating the proposed process:

Table 1 - Process scheme for producing a hydrogel of methylsilicic acid according to the claims of the invention of the proposed process, which comprises main features of the proposed process according to the claims of the invention, as well as other regulative conditions of this technological process (for examples 1, for the best variant of carrying out this process, 2, 3, 4, 5, 6, 7, 8, 9, 10, 11, 12).

Table 2 - Specifications of quantitative parameters of the technological process according to the process for examples 1, 2, 3, 4, 5, 6, 7, 8, 9, 10, 11, 12 of the industrial implementation of this process, which is carried out according to the process scheme presented in Table 1.

Table 3 - Specifications of the adsorption activity of a hydrogel of methylsilicic acid produced according to the proposed process in comparison with the adsorption activity a hydrogel of methylsilicic acid produced according to the prototype.

**Table 1. PROCESS SCHEME of the proposed process for producing a hydrogel of methylsilicic acid according to the claims of the invention.**

| **Stages of the process for producing a hydrogel of methylsilicic acid according to the proposed process** |
|---|
| **1. Preparation of the working mixture** |
| (solution of methylsilicic acid in an organic solvent - aqueous solution of ethyl alcohol) Process: Dissolving of methyltriethoxysilane in the organic solvent with quantitative ratio between them 1-1.2 : 2-2.7. |
| Ingredients: Substance, which is dissolved - methyltriethoxysilane in a proportion by mass of the basic substance of not less than 98% is an intermediate product. Ethyl alcohol having the concentration of ethanol with volumetric part of ethyl alcohol from 60 to 96.5%, that is an aqueous solution of ethanol with concentration of ethanol by volume from 60 to 96.5%. |

| **2. Preparation of the hydrolyzing mixture** |
|---|
| Process: Preparation of the hydrolyzing mixture. Ingredients: Hydrochloric acid with the basic substance concentration of 36 mass % - 0.84 litres. Drinking water previously purified according to the requirements of the State Pharmacopoeia of Ukraine 45±1 litres. |

| **3. Preparation of the alkaline solution** |
|---|
| Process: Preparation of a 20% alkaline solution. Ingredients: Sodium hydroxide (NaOH) or potassium hydroxide (KOH). Purified water. |

| **4. Hydrolysis of methyltriethoxysilane** |
|---|
| Process: Dosing of the hydrolyzing mixture into the working mixture; process of polycondensation. |
| Ingredients: Hydrolyzing mixture. Working mixture. Process parameters: Hydrolysis of methyltriethoxysilane is carried out at a volume ratio of the working mixture to the hydrolyzing mixture of 3-3.5 : 0.7-1.5, respectively. Time of the introduction of hydrolyzing mixture into the working mixture is 30-40 minutes. After the completion of the introduction of the hydrolyzing mixture into the working mixture the mixing of the produced reaction mass is carried out for 10-15 minutes, then the mixing is discontinued and the reaction mass without mixing is set for 3.0-3.5 hours at a pH value of not less than 3. |

| **5. Production of the alcohydrogel of methylsilicic acid** |
|---|
| Process: Production of the alcohydrogel of methylsilicic acid. |
| Parameters: After completion of the methyltriethoxysilane hydrolysis, the alkaline solution in the amount of 5.95 litres having the temperature of 16-30°C is introduced into the reaction mass with constant mixing. After the introduction of the entire volume of the alkaline solution the mixing of the reaction mass is discontinued. Gelation occurs in the reaction mixture at rest, so the process of gel maturation - structure formation of the alcohydrogel of methylsilicic acid. Process of hydrogel maturation is carried out for not less than 7.5 hours - until a colourless alcohydrogel of methylsilicic acid with a slight opalescence is produced. |

| **6. Grinding of the alcohydrogel of methylsilicic acid.** |
|---|
| Process: Grinding of the resulting alcohydrogel of methylsilicic acid. Process parameters: Grinding for 1-2 hours until particles with sizes not greater than 4-6 mm are produced. |

| **7. Replacement of ethyl alcohol in the alcohydrogel of methylsilicic acid with purified water until the formation of the final (end) product** |
|---|
| Process: Replacement of ethyl alcohol (ethyl alcohol in the alcohydrogel of methylsilicic acid is found in a bound state - is an intermicellar liquid) by introducing of purified water into the alcohydrogel of methylsilicic acid at a rate of 2-4 litres per hour until a neutral reaction according to phenolphthalein and the formation of the final (end) product - hydrogel of methylsilicic acid. |
| Reagents: Alcohydrogel of methylsilicic acid. Purified water. Parameters, process conditions: Introduction of purified water into the alcohydrogel of methylsilicic acid at a rate of 2-4 litres per hour until a neutral reaction according to phenolphthalein and the formation of the final (end) product - hydrogel of methylsilicic acid. |

**Example 2.** This Example is carried out as Example 1, but in accordance with the quantitative specifications (parameters) of the process as shown in Example 2 in Table 2.

**Example 3.** This example is carried out as Example 1, but in accordance with the quantitative specifications (parameters) of the process, as shown for Example 3 in Table 2.

**Example 4.** This example is carried out as Example 1, but in accordance with the quantitative specifications (parameters) of the process, as shown for Example 4 in Table 2.

**Example 5.** This example is carried out as Example 1, but in accordance with the quantitative specifications (parameters) of the process, as shown for Example 5 in Table 2.

**Example 6.** This example is carried out as Example 1, but in accordance with the quantitative specifications (parameters) of the process, as shown for Example 6 in Table 2.

**Example 7.** This example is carried out as Example 1, but in accordance with the quantitative specifications (parameters) of the process, as shown for Example 7 in Table 2.

**Example 8.** This example is carried out as Example 1, but in accordance with the quantitative specifications (parameters) of the process, as shown for Example 8 in Table 2.

**Example 9.** This example is carried out as Example 1, but in accordance with the quantitative specifications (parameters) of the process, as shown for Example 9 in Table 2.

**Example 10.** This example is carried out as Example 1, but in accordance with the quantitative specifications (parameters) of the process, as shown for Example 10 in Table 2.

**Example 11.** This example is carried out as Example 1, but in accordance with the quantitative specifications (parameters) of the process, as shown for Example 11 in Table 2.

**Example 12.** This example is carried out as Example 1, but in accordance with the quantitative specifications (parameters) of the process, are shown for Example 12 in Table 2.

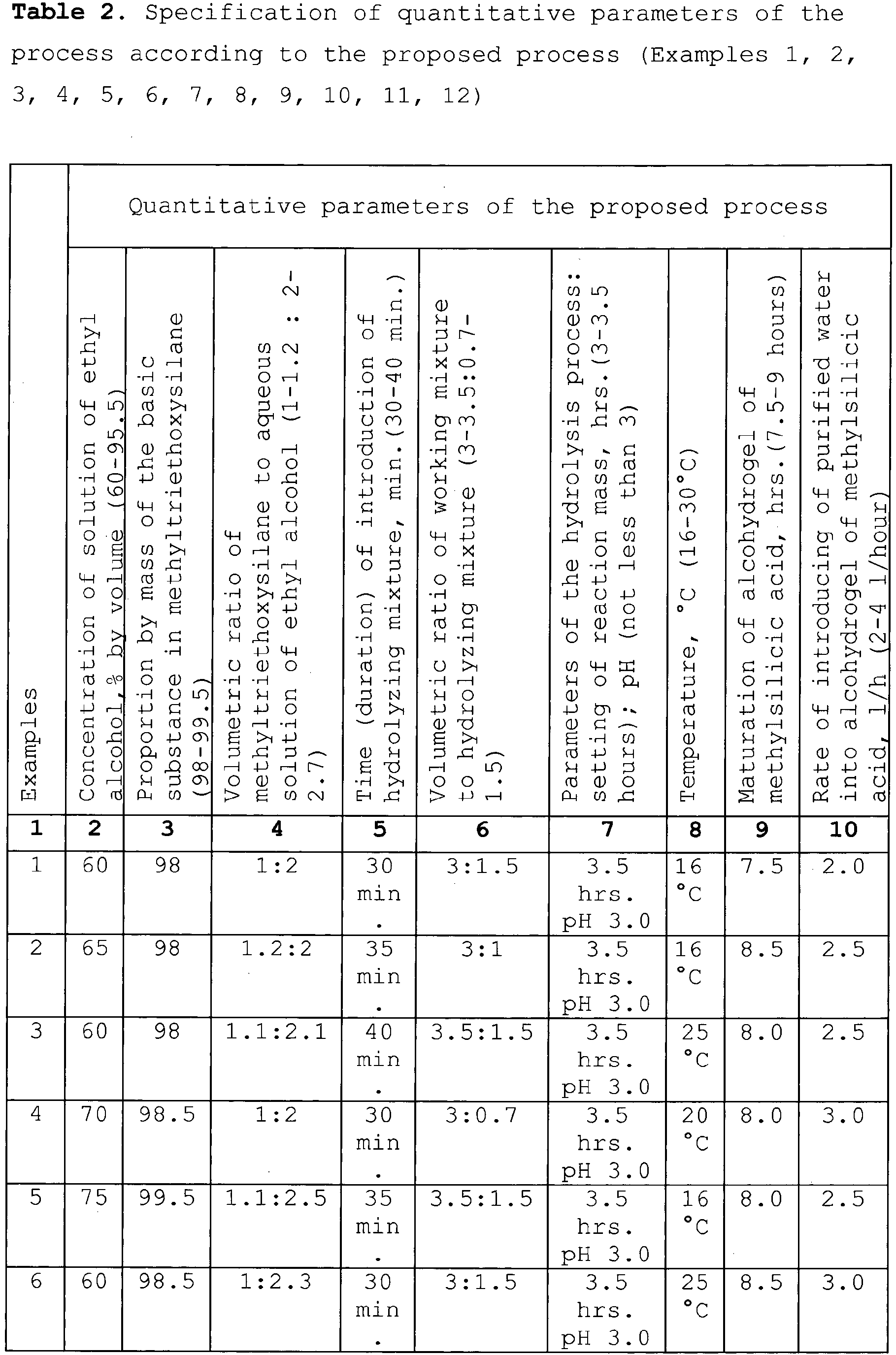

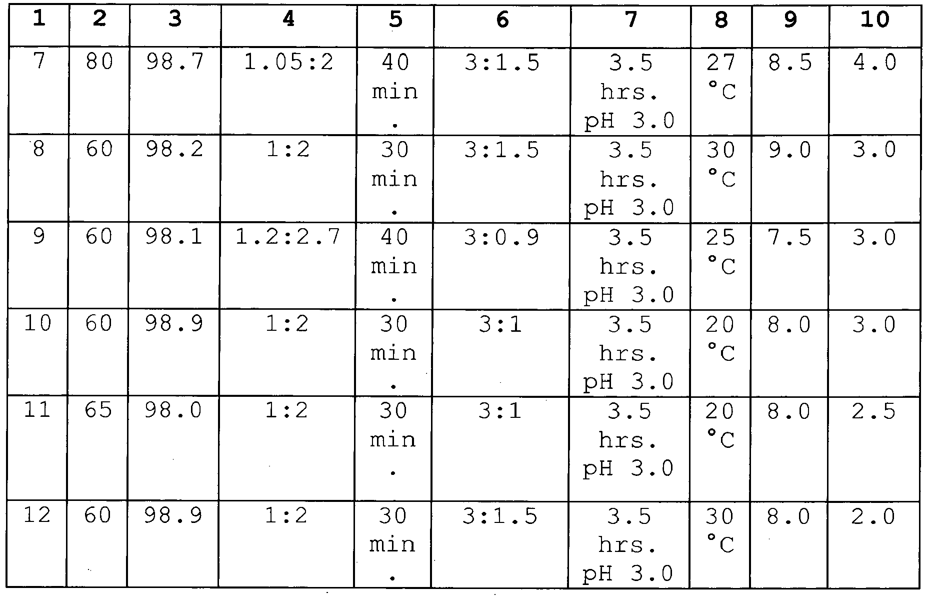

**Table 3. Adsorption activity of the hydrogel of methylsilicic acid produced according to the proposed process in comparison with the prototype.**

| Example | Adsorption activity of the hydrogel of methylsilicic acid, (according to Congo-red), mg/g | |
|---|---|---|
| | Hydrogel produced according to the **proposed process** (Examples 1-12 provided above in the description of the invention - proposed process) | Hydrogel produced according to the **prototype** (Examples 1-8 provided in the description of Patent of invention of Ukraine No. 27434) |
| 1 | 2 | 3 |
| 1 | 8.2 | 2.6 |
| 2 | 9.5 | 5.2 |
| 3 | 8.7 | 4.5 |
| 4 | 9.9 | 3.9 |
| 5 | 10.5 | 5.0 |
| 6 | 7.9 | 4.7 |
| 7 | 10.2 | 3.5 |
| 8 | 8.9 | 2.0 |
| 9 | 7.8 | - |
| 10 | 9.6 | - |
| 11 | 10.3 | - |
| 12 | 8.5 | - |

Combination of all features of the proposed process for producing a methylsilicic acid hydrogel, including among others its new features allows achieving the technical result, i.e. a 2.0 - 3.9 fold increase of adsorption activity of the end product, reduction of the consumption of ethyl alcohol by 30 - 40%.

Cause-effect relationship between the new features and the technical result, which is achieved due to the implementation of the proposed process, is comprised in the following.

Setting of the produced alcohydrogel of methylsilicic acid for not less than 7.5 hours until a colourless intermediate product with a slight opalescence is produced, as a result of its prolonged period of maturation, showed the positive effect: as the result of the proposed process at the final stage the end product is produced, which has an increasedly developed inner surface of the solid phase of the gel with active centres, improved gel mesh structure, optimized content of the intermicellar alcohol-aqueous liquid, which, in combination with effects of other factors of the process, is contemplated to dramatically increase the adsorption properties of the end product.

Subsequent treatment of the grinded alcohydrogel of methylsilicic acid with purified water at a rate of 2 - 4 litres per hour provides a guaranteed replacement of the organic solvent - ethanol up to a necessary extent of the remaining content of ethyl alcohol in the hydrogel. At the same time a high homogeneity of the produced gel is achieved.

Cause-effect relationship for the other features of the proposed process is described above - in previous sections of the description of the invention.

Achievement of the technical result while using the proposed process is enhanced by:
- use of an aqueous solution of ethyl alcohol at a concentration of 60 - 80% by volume as the organic solvent;
- use of methyltriethoxysilane in a proportion by mass of the basic substance of 98 - 99.5%;
- preparation of the hydrolyzing mixture from hydrochloric acid with a concentration of 35 - 39% by mass and water purified according to the requirements of the State Pharmacopoeia of Ukraine;
- continuation of the mixing of the reaction mass for 10 - 15 minutes (prior to its temporary setting) after introduction of the hydrolyzing mixture;
- maturation of the alcohydrogel of methylsilicic acid in the time range during 7.5 - 9.0 hours;
- use of water purified according to the requirements of the State Pharmacopoeia of Ukraine for replacement of ethyl alcohol in alcohydrogel of methylsilicic acid until the neutral reaction according to phenolphthalein.

The hydrogel of methylsilicic acid as the end product produced according to the proposed process in accordance with all examples described above has a composition of:

[(CH₃SiO_{1.5} * x H₂O]ₙ,wherein x = 30 - 38.

Adsorption activity of the hydrogel samples produced according to the proposed process was determined in the model experiment by sorption of Congo-red on a spectrophotometer according to standard methodology with subsequent calculations of the final values:
mean value of adsorption activity of hydrogels of methylsilicic acid produced according to the proposed process is 7.8 - 10.5 mg/g (according to Congo-red).

Whereas values of adsorption activity of hydrogels of methylsilicic acid produced according to the Examples 1-8 of the **PROTOTYPE** (provided in the description of this prototype - Patent of invention of Ukraine No. 27434) are: 2.6; 5.2; 4.5; 3.9; 5.0; 4.7; 3.5; 2.0.

Consumption of ethyl alcohol resulting from the use of the organic solvent in implementation of the proposed process is reduced in comparison with the prototype by 30 - 40%.

Technical result of using the proposed process is achieved just in the range of values of the quantitative parameters (specifications), which are defined in the claims of the proposed invention. Outside the proposed values of the quantitative specifications the technical result is not achieved.

Quantitative parameters of the proposed process can change in the optimal ranges, which are proposed in accordance with the claims of the invention. Authors carried out numerous investigations in developing the combination of quantitative parameters, which specify the proposed solution, a detailed structural-systemic analysis and selection of the optimal values, in the range of which the necessary effect is achieved, were carried out.

### Industrial application

The proposed invention is industrially applicable, it can be implemented in an industrial technology and widely used for the intended purpose. Examples of its particular industrial implementation, including among others the best variant, are provided above.

The proposed process was tested in the industrial environment. During testing of this process it was shown on the basis of carrying out the production that the combination of all of its features allows achievement of the technical (positive) result: which allows a 2.0 - 3.9 fold increase of adsorption activity of the end product, reduction of the consumption of ethyl alcohol by 30 - 40%.

The proposed process for producing the hydrogel of methylsilicic acid can be implemented in the production of adsorbents, which are produced on the basis of hydrogel of methylsilicic acid, and which can be used for absorption purification processes of liquids (water, biological fluids) from microorganisms, toxic metabolites, radionuclides and also as enterosorbents. The proposed process allows production of a highly adsorptive hydrogel of methylsilicic acid with an increased range of applications in various fields, and also broadens a range of production technologies of hydrogels of methylsilicic acid, which can be labelled in accordance with an applicable legislation with certain trade names, for example, SORBOGEL.

Numerous clinical investigations of the hydrogel produced according to the proposed process have shown that its high sorption activity, selectivity of adsorption, simplicity of use allow its use for the prophylaxis and treatment of many diseases in adults and children, for emergency detoxification of living organisms.

The hydrogel of methylsilicic acid produced according to the proposed process is also a starting material for producing a xerogel of methylsilicic acid, which can be used as a substance for production of composite materials for medical, food and technical applications.

## Claims

1. A process for producing a hydrogel of methylsilicic acid comprising preparation of a working mixture from methyltriethoxysilane and an organic solvent, preparation of a hydrolyzing mixture from hydrochloric acid and purified water, preparation of an alkaline solution, hydrolysis of methyltriethoxysilane in the presence of an acidic catalyst with a subsequent alkaline treatment, setting of the reaction mass, grinding of the resulting alcogel of methylsilicic acid, its further washing with purified water until a hydrogel of methylsilicic acid is formed, **characterized in that,** an aqueous solution of ethanol with a concentration of ethyl alcohol by volume from 60 to 96.5% is used as the organic solvent in preparation of the working mixture, and quantitative volumetric ratio of methyltriethoxysilane to the organic solvent as the aqueous ethanol solution is 1 - 1.2 : 2 - 2.7, respectively, wherein methyltriethoxysilane is used in a proportion by mass of the basic substance of not less than 98%, and hydrolysis of methyltriethoxysilane is carried out at a volume ratio of the working mixture to the hydrolyzing mixture of 3 - 3.5 : 0.7 - 1.5, respectively, wherein time of introduction of the hydrolyzing mixture into the reaction mass is 30 - 40 minutes, and setting of the resulting reaction mass is carried out for 3 - 3.5 hours at a pH value of not less than 3, and introducing of an alkaline solution having a temperature of 16 - 30 ° C into the resulting reaction mass after completion of the hydrolysis of methyltriethoxysilane, after which the resulting alcohydrogel of methylsilicic acid is kept for maturation for not less than 7.5 hours, wherein maturation process of the alcohydrogel of methylsilicic acid is carried out until a colourless intermediate product with a slight opalescence is produced, and washing of the grinded alcohydrogel of methylsilicic acid is carried out by introducing of purified water at a rate of 2 - 4 litres per hour into it.

2. The process of claim 1, **characterized in that,** methyltriethoxysilane is used in a proportion by mass of the basic substance of 98-99.5%.

3. The process of claim 1, **characterized in that**, the hydrolyzing mixture is prepared from hydrochloric acid with a concentration of 35-39 mass % and water purified according to the requirements of the State Pharmacopoeia of Ukraine.

4. The process of claim 1, **characterized in that,** mixing of the reaction mass is carried out for 10 - 15 minutes after the introduction of the hydrolyzing mixture into the reaction mass prior to its setting.

5. The process of claim 1, **characterized in that,** drinking water for the replacement of ethyl alcohol in the alcohydrogel is purified beforehand to pH 5-7 according to the requirements of the State Pharmacopoeia of Ukraine, and the process of replacement is carried out until a neutral reaction according to phenolphthalein.

6. The process of claim 1, **characterized in that,** the resulting alcohydrogel of methylsilicic acid is kept for 7.5 - 9.0 hours for maturation after the introduction of the alkaline solution.

7. The process of claim 1, **characterized in that,** the alcohydrogel of methylsilicic acid is grinded for 1 - 2 hours until particles with sizes not greater than 4 - 6 mm are produced for the replacement of ethyl alcohol with water.

## Patentansprüche

1. Verfahren zur Herstellung eines Hydrogels aus Methylkieselsäure, umfassend die Herstellung eines Arbeitsgemischs aus Methyltriethoxysilan und einem organischen Lösungsmittel, Herstellung einer hydrolisierenden Mischung aus Salzsäure und gereinigtem Wasser, Herstellung einer alkalischen Lösung, die Hydrolyse von Methyltriethoxysilan in Gegenwart eines sauren Katalysators mit anschließender alkalischer Behandlung, Einstellung der Reaktionsmasse, Mahlen des erhaltenen Alkogels aus Methylkieselsäure, dessen weiteres Waschen mit gereinigtem Wasser bis sich ein Hydrogel aus Methylkieselsäure bildet, **dadurch gekennzeichnet, dass** eine wässrige Lösung aus Ethanol mit einer Konzentration an Ethylalkohol in einem Volumen von 60 bis 96,5 % als organisches Lösungsmittel bei der Herstellung des Arbeitsgemischs verwendet wird und das quantitative Volumenverhältnis von Methyltriethoxysilan zum organischen Lösungsmittel als wässrige Ethanollösung 1 - 1,2 : 2 - 2,7 ist, wobei Methyltriethoxysilan einen Massenanteil von nicht weniger als 98% der Basissubstanz hat und die Hydrolyse des Methyltriethoxysilans in einem Volumenverhältnis der Arbeitsmischung zur Hydrolysierungsmischung von 3 - 3,5 : 0,7 - 1,5 durchgeführt wird, wobei die Einführungszeit der Hydrolysierungsmischung in die Reaktionsmasse 30 - 40 Minuten beträgt und die Einstellung der resultierenden Reaktionsmasse für 3 - 3,5 Stunden bei einem pH-Wert von nicht weniger als 3 durchgeführt wird und die Einführung der alkalischen Lösung mit einer Temperatur von 16 - 30 °C in die resultierende Reaktionsmasse nach Beendigung der Hydrolyse des Methyltriethoxysilans stattfindet, wonach das resultierende Alkohydrogel aus Methyltriethoxysilan mindestens 7,5 Stunden ausreift, wobei der Reifeprozess des Alkohydrogels aus Methylkieselsäure so lange ausgeführt wird, bis sich ein farbloses Zwischenprodukt mit einer leichten Opaleszenz bildet, und Waschen des gemahlenen Alkohydrogels aus Methylkieselsäure mittels Einbringen von 2 - 4 Litern gereinigtem Wasser pro Stunde.

2. Verfahren nach Anspruch 1, **dadurch gekennzeichnet, dass** Methyltriethoxysilan mit einem Massenanteil von 98 - 99,5 % der Basissubstanz verwendet wird.

3. Verfahren nach Anspruch 1, **dadurch gekennzeichnet, dass** die hydrolisierende Mischung aus Salzsäure mit einer Konzentration von 35 - 39 Masse-% und Wasser, welches gemäß den Anforderungen der staatlichen Pharmacopoeia der Ukraine gereinigt wurde, hergestellt wird.

4. Verfahren nach Anspruch 1,**dadurch gekennzeichnet, dass** die Mischung der Reaktionsmasse für 10 - 15 Minuten nach der Einführung der hydrolisierenden Mischung in die Reaktionsmasse vor deren Einstellung durchgeführt wird.

5. Verfahren nach Anspruch 1, **dadurch gekennzeichnet, dass** Trinkwasser für den Ersatz von Ethylalkohol in dem Alkohydrogel zuvor auf einen pH-Wert von 5-7 gemäß den Anforderungen der staatlichen Pharmacopoeia der Ukraine gereinigt wird, und der Austausch bis zu einer neutralen Reaktion entsprechend Phenolphthalein stattfindet.

6. Verfahren nach Anspruch 1, **dadurch gekennzeichnet, dass** das resultierende Alkohydrogel aus Methylkieselsäure nach dem Einführen der alkalischen Lösung 7,5 - 9,0 Stunden reift.

7. Verfahren nach Anspruch 1, **dadurch gekennzeichnet, dass** das Alkohydrogel aus Methylkieselsäure für 1 - 2 Stunden geschliffen wird bis sich Partikel mit einer Größe von nicht größer als 4 - 6 mm bilden zum Ersatz des Ethylalkohols durch Wasser.

## Revendications

1. Procédé pour produire un hydrogel d'acide méthylsilicique, comprenant la préparation d'un mélange de travail à partir de méthyltriéthoxysilane et d'un solvant organique, la préparation d'un mélange d'hydrolyse à partir d'acide chlorhydrique et d'eau purifiée, la préparation d'une solution alcaline, l'hydrolyse du méthyltriéthoxysilane en présence d'un catalyseur acide avec un traitement alcalin subséquent, la décantation de la masse réactionnelle, le broyage de l'alcogel d'acide méthylsilicique résultant, ultérieurement son lavage à l'eau purifiée jusqu'à formation d'un hydrogel d'acide méthylsilicique, **caractérisé en ce qu'**une solution aqueuse d'éthanol ayant une concentration volumique d'alcool éthylique de 60 à 96,5 % est utilisée en tant que solvant organique dans la préparation du mélange de travail, et le rapport volumétrique quantitatif du méthyltriéthoxysilane au solvant organique sous la forme de la solution aqueuse d'éthanol est de 1-1,2/2-2,7, respectivement, dans lequel le méthyltriéthoxysilane est utilisé en une proportion en masse de la substance basique non inférieure à 98 %, et l'hydrolyse du méthyltriéthoxysilane est effectuée à un rapport volumique du mélange de travail au mélange d'hydrolyse de 3-3,5/0,7-1,5, respectivement, dans lequel le temps d'introduction du mélange d'hydrolyse dans la masse réactionnelle est de 30-40 minutes, et la décantation de la masse réactionnelle résultante est effectuée pendant 3-3,5 heures à un pH non inférieur à 3, et une solution alcaline ayant une température de 16-30°C est introduite dans la masse réactionnelle résultante après achèvement de l'hydrolyse du méthyltriéthoxysilane, après quoi l'alcohydrogel d'acide méthylsilicique résultant est maintenu à des fins de maturation pendant au moins 7,5 heures, dans lequel le procédé de maturation de l'alcohydrogel d'acide méthylsilicique est effectué jusqu'à ce qu'un produit intermédiaire incolore ayant une légère opalescence soit produit, et le lavage de l'alcohydrogel d'acide méthylsilicique broyé est effectué par introduction d'eau purifiée à un débit de 2-4 litres par heure dans celui-ci.

2. Procédé selon la revendication 1, **caractérisé en ce que** le méthyltriéthoxysilane est utilisé en une proportion en masse de la substance basique de 98-99,5 %.

3. Procédé selon la revendication 1, **caractérisé en ce que** le mélange d'hydrolyse est préparé à partir d'acide chlorhydrique ayant une concentration de 35-39 % en masse et d'eau purifiée conformément aux exigences de la Pharmacopée de l'Etat d'Ukraine.

4. Procédé selon la revendication 1, **caractérisé en ce que** le mélange de la masse réactionnelle est effectué pendant 10-15 minutes après l'introduction du mélange d'hydrolyse dans la masse réactionnelle avant sa décantation.

5. Procédé selon la revendication 1, **caractérisé en ce que** de l'eau de boisson pour le remplacement de l'alcool éthylique dans l'alcohydrogel est purifiée à l'avance à pH 5-7 conformément aux exigences de la Pharmacopée de l'Etat d'Ukraine, et le procédé de remplacement est effectué jusqu'à une réaction neutre d'après la phénolphtaléine.

6. Procédé selon la revendication 1, **caractérisé en ce que** l'alcohydrogel d'acide méthylsilicique résultant est maintenu pendant 7,5-9,0 heures à des fins de maturation après l'introduction de la solution alcaline.

7. Procédé selon la revendication 1, **caractérisé en ce que** l'alcohydrogel d'acide méthylsilicique est broyé pendant 1-2 heures jusqu'à ce que des particules ayant des tailles ne dépassant pas 4-6 mm soient produites pour le remplacement de l'alcool éthylique par de l'eau.
